# EUROPEAN PATENT APPLICATION

(11) **EP 3 278 673 A1**
(43) Date of publication of application: **07.02.2018**
(21) Application number: 16187720.4
(22) Date of filing: 07.09.2016
(51) Int. Cl.: A23K 10/30, A23K 50/42, A23K 40/00

(54) **EDIBLE PET CHEW**

(30) Priority: 03.08.2016 CN 201610630054
(71) Applicant: Hua & Yi (Shanghai) Co., Ltd, Shanghai OT 200040 (CN)
(72) Inventor: Qiu, Shaodong, Suzhou, OT 215004 (CN)
(74) Representative: Patent Boutique LLP

(57) **Abstract**

A pet chew comprises a casing having a cylindrical cross section and defining a first end and a second end, the casing comprising a first section and a second section having edges running along the length of the casing joined to one another, wherein the first section has a different appearance than the second section, wherein the first section comprises an edible plant material and the second section comprises a meat material, and wherein the casing is knotted at the first end and the second end.

## Description

The present invention relates to a pet dental chew and a method of preparing the same.

### CROSS-REFERENCE TO RELATED APPLICATION

This application claims priority to China Application No. 201610630054.5, filed August 3, 2016, which is incorporated herein by reference in its entirety for all purposes.

### BACKGROUND OF THE INVENTION

Edible pet chews have been typically made from rawhide and jerky, for example in the shape of a knotted bone, as described for example in U.S. Pat. No. 5,673,673. Such traditional knotted bones from rawhide, produced for the purpose of teeth grinding and chewing, have the disadvantage of lack of nutrition, excessively hard skin and poor palatability as well as environmental pollution, high cost and an insufficient source of raw materials.

U.S. Pat. No. 7,677,203, describes a two-layered knotted bone pet chew produced with plant starch as a main raw material for the outer casing. The chewy edible material such as meat is concealed within the outer casing. With plant starch as a main raw material in the outer casing, this chew only serves as a food to dogs, but provides little or no teeth grinding and chewing functions. Furthermore, the chewy edible material being positioned within the outer casing makes it difficult for a pet to reach the chewy edible material. As a result, the pet easily loses interest in the bone.

### SUMMARY

The present invention provides a pet chew comprising: a casing having a cylindrical cross section and defining a first end and a second end, the casing comprising a first section and a second section having edges running along the length of the casing joined to one another, wherein the first section has a different appearance than the second section, wherein the first section comprises an edible plant material and the second section comprises a meat material, and wherein the casing is knotted at the first end and the second end.

The present invention also provides a preparation method for a pet chew comprising: a first section processing, a second section processing, and a forming procedure. The first section processing includes: (1) a material mixing step: put a plant starch, e.g., corn, wheat, sweet potato, potato, tapioca, glycerin, potassium sorbate and food pigment into a stainless steel dough maker, and mix them; (2) a feeding step: add gradually the material processed in step (1) into a feeder. In some embodiments, step (2) in the first section processing further comprises adding 2%-5% rawhide, which is melted into gelatin to enhance the flexibility of the pet chew. The second section processing includes: (1) a meat beating step: the meat comprising at least one from chicken, duck, beef, pork, lamb, or rabbit is processed into paste; (2) an agitating and mixing step: put the pasted meat processed in step (1) and mineral in an agitator, mix them and agitate them to ensure their intensive mixing; (3) a dyeing, flavoring and beating step: put the material processed in step (2) into a stainless steel dough maker and keep beating and rotating the material, and add a mixed liquid composed of glycerin, fish oil, multiple vitamin, potassium sorbate, natural essence and food pigment; (4) a feeding step: add gradually the material processed in step (3) into a feeder. The forming procedure comprises: squeezing the materials from both feeders into a pressing round die, producing a casing having a cylindrical cross section and defining a first end and a second end, wherein the casing comprises the first and second sections having edges running along the length of the casing joined to one another, cutting the casing into small pieces, and knotting the casing at the first end and the second end.

In one specific embodiment, the present invention provides the following: a casing having a cylindrical cross section and defining a first end and a second end, the casing comprising a first section and a second section having edges running along the length of the casing joined to one another, wherein the first section has a different appearance than the second section, wherein the first section comprises an edible plant material and the second section comprises a meat material, and wherein the casing is knotted at the first end and the second end. Optionally, the plant material of the first section comprises a plant starch selected from corn, wheat, sweet potato, potato or tapioca. Optionally, the meat-containing material of the second section comprises at least one of chicken, duck, beef, pork, lamb, or rabbit. Optionally, the casing further comprises glycerin in one of the first and second sections, or both. Optionally, the casing further comprises rawhide in one of the first and second sections. Optionally, the plant material in the casing is 50% to 70% by weight of the casing. Optionally, the meat-containing material in the casing is 5% to 20% by weight of the casing. Optionally, the glycerin in the casing is 2% to 8% by weight of the casing. Optionally, the rawhide in the casing is 1% to 5% by weight of the casing. Optionally, the casing further comprises at least one additive material. Optionally, the at least one additive material comprises glucosamine hydrochloride and chondroitin sulphate. Optionally, the at least one additive material comprises herbs and calcium. Optionally the herbs comprise at least one of parsley, peppermint, chlorophyll, or yucca extract. Optionally, the at least one additive material comprises omega 3 & 6 fatty acids, flaxseed and vitamin E. Optionally, the at least one additive material in the casing is 0.05% to 1% by weight of the casing. Optionally, the casing further comprises an edible pigment in one of the first and second sections. Optionally, the edible pigment in the casing is 0.1% to 0.2% by weight of the casing. Optionally, the casing further comprises potassium sorbate in one of the first and second sections. Optionally, the potassium sorbate in the casing is 0.01% to 0.08% by weight of the casing.

The beneficial results of the disclosed embodiment are: adopting low fat grains such as corn starch in a first section and meat in a second section especially formed in a single-layered casing provides an appearance appealing to a pet and improves the nutrition and chewing toughness of the pet dental bone. The pet dental bone in the present invention, besides containing the above described main raw material, with addition of multiple nutritious substances, is more suitable for feeding different sizes of dogs and dogs with different preferences to achieve the purposes of improving physique and bones, cleaning oral cavity and sufficient digestion of dogs.

Other embodiments will become apparent from a review of the ensuing detailed description.

### BRIEF DESCRIPTION OF THE FIGURES

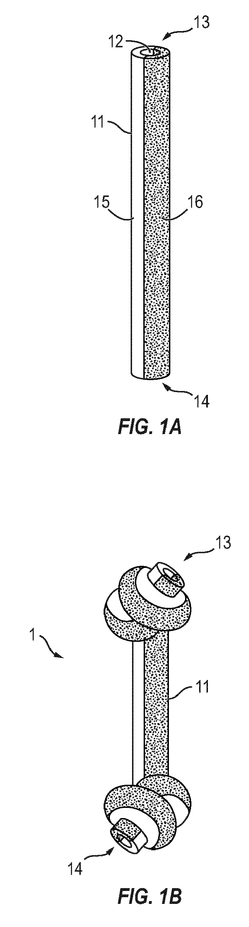

Figure 1A is a schematic view of one embodiment of the casing of the present invention after it exits out of a pressing die and before it is cut into pieces.
Figure 1B is a schematic view of one embodiment of the present invention.

### DETAILED DESCRIPTION

The present invention provides a pet chew formed from a casing including at least first and second sections. The casing is cylindrical in cross section meaning the casing can form a cylinder when the interior space is maximally expanded by air or other material but does not imply that the casing necessarily exists as a perfect cylinder when incorporated into a chew toy. To the contrary, the casing is typically knotted at both ends forming a shape resembling a bone.

The casing includes at least two sections formed from materials different in composition and appearance. The first and second sections have edges running along the length of the casing joined to one another. A first section comprises an edible plant material and the second section comprises a meat material. The casing may or may not include additional sections besides the first and second sections. Preferably, the casing is formed entirely from first and second sections. A casing can include one each of the first and second sections or can contain multiple alternating first and second section; that is moving around the cross-section of the casing traverses a first section followed by a second section followed by another first section and another second section and so forth.

The pet chew can be formed from one or multiple casings. Preferably, the pet chew is formed from a single casing. The one or more casings forming the pet chew can be placed in any desired shape. Preferably, a single casing is placed in the shape of a bone by tying knots in both of its ends.

The pet dental bone chew of the present invention can have an appealing appearance arising from the casing formed by two sections different in composition and appearance. Unlike a pet chew having a chewy material largely or entirely concealed within a wrap disclosed in the prior art, the pet chew of the present invention can largely exposes the plant-material section and the meat-containing section which have edges running along the length of the casing joined to one another. It can thus prevents the pet from losing interest in the pet dental chew before it expends the effort to reach the chewy material as disclosed in the prior art.

The pet chew of the present invention can comprise various nutritional elements and other additive materials. The functions of each component of the disclosed embodiments can be as follows: 1) the plant starch selected from corn, wheat, sweet potato, potato or tapioca serves as a staple food to increase the caloric content of the pet dental bone; 2) the meat including chicken, duck, beef, pork, lamb, and rabbit are the favorites of dogs and contain multiple nutritious microelements such as animal protein, calcium and phosphorus, which are essential to strengthening dogs' bones and physique; 3) glycerin is a polyol and acts as a plasticizer by binding water molecules together, which in turn increases the flexibility of the resulting formulation because more water is retained in the overall matrix; 4) the additive materials including glucosamine hydrochloride and chondroitin sulphate are helpful for hip and joint care; 5) the additive materials including herbs and calcium are helpful for dental care; 6) the additive materials including omega 3 & 6 fatty acids, flaxseed, and vitamin E are helpful for skin care; 7) the natural essence and edible pigment can increase the taste of the pet dental bone; and 8) a small amount of rawhide in the pet dental bone is to increase elasticity of the pet dental bone. The pet chew of the present invention can thus provide a pet with rich nutrition, teeth grinding and chewing functions and good palatability. Figs. 1A and 1B show exemplary embodiments without limiting the scope of the invention.

With reference to FIG. 1A, it is a schematic view of one embodiment of the casing of the present invention after it exits out of a pressing die and before it is cut into pieces. The pet dental bone of the present invention includes a casing 11 having a cylindrical cross section 12. In some embodiments, the pet chew can be formed by multiple casings. The casing forms a cylinder and the interior space is maximally expanded by air. The casing 11 includes a first end 13 and a second end 14 which can be tied into different shapes.

The casing 11 comprises a first section 15 and a second section 16 having edges running along the length of the casing 11 joined to one another. The casing 11 is formed by the first section 15 in one color and the second section 16 in another color through the pressing die. In some embodiments, a casing can contain multiple alternating first and second section; that is moving around the cross-section of the casing traverses a first section followed by a second section, followed by another first section and another second section and so forth. The first section 15 and the second section 16 differ in composition and appearance. The first section 15 comprises an edible plant material and the second section 16 comprises a meat material. The plant material of the first section 15 comprises a plant starch selected from corn, wheat, sweet potato, potato, or tapioca. The plant starch serves as a staple food to increase the caloric content of the pet dental bone. They also work as a support matrix for the second section 16 when they are hardened. In some embodiments, the plant material in the casing 11 is 50% to 70% by weight of the casing.

The meat-containing material of the second section 16 comprises at least one of chicken, duck, beef, pork, lamb, or rabbit. The meat is provided in the second section 16 to meet pets' varying flavor preference. In order to make the appearance of the casing 11 more uniform, the meat in the second section 16 usually is in a color that is close to the natural look of meat. For example, chicken is usually present in red, beef in brown, and duck in light brown. The final pet dental bone comprises a plant-based material in one color in the first section 15 and a meat material in another color in the second section 16. The first section 15 and the second section 16 are joined to one another. The pet dental bone with the first section 15 and the second section 16 in two colors become more playful and enjoyable to a pet. In some embodiments, the meat-containing material in the casing 11 is 5% to 20% by weight of the casing 11.

In some embodiments, the casing 11 comprises glycerin in one of the first and second sections, or both. The glycerin increases the flexibility of the formulation. The glycerin in the casing 11 is 2% to 8% by weight of the casing 11. In some embodiments, the casing 11 further comprises rawhide in one of the first and second sections. The rawhide in the casing 11 is 1% to 5% by weight of the casing 11. In some embodiments, the casing 11 further comprises at least one additive material. The at least one additive material is 0.05% to 1% by weight of the casing 11. The at least one additive material comprises glucosamine hydrochloride and chondroitin sulphate for hip and joint care. Alternatively, the at least one additive material comprises herbs and calcium for dental care. The herbs comprise at least one of parsley, peppermint, chlorophyll, or yucca extract. Alternatively, the at least one additive material comprises omega 3 & 6 fatty acids, flaxseed, and vitamin E for skin care.

In some embodiments, the casing 11 further comprises an edible pigment in one of the first and section sections to enhance the appearance of the pet chew. The edible pigment in the casing 11 is 0.1% to 0.2% by weight of the casing 11. In some embodiments, the casing 11 further comprises potassium sorbate in one of the first and second sections as a safe food preservative. The potassium sorbate in the casing 11 is 0.01% to 0.08 % by weight of the casing 11.

With reference to FIG. 1B, it is a schematic view of one embodiment of the present invention. The pet chew 1 of the present invention includes a casing 11 with a first end 13 and a second end 14 after it exits out of a pressing die. The casing 11 in this embodiment is knotted at the first end 13 and the second end 14 to resemble a bone.

Pet chews of the present invention can be prepared by an exemplary method including: a first section processing, a second section processing, and a forming procedure. The first section processing includes: (1) a material mixing step in which a plant starch, e.g., corn, wheat, sweet potato, potato, and/or tapioca, and other components, such as glycerin, potassium sorbate and/or food pigment is put into a vessel, such as a stainless steel dough maker, and mixed; (2) a feeding step in which the material processed in step (1) is gradually introduced into a feeder. In some embodiments, step (2) in the first section processing further comprises adding 2%-5% rawhide, which is melted into gelatin to enhance the flexibility of the pet chew. The second section processing includes: (1) a meat beating step in which meat comprising at least one from chicken, duck, beef, pork, lamb, or rabbit is processed into paste; (2) an agitating and mixing step in which the pasted meat processed in step (1) and a mineral are mixed in an agitator to ensure their intensive mixing; (3) a dyeing, flavoring and beating step in which the material processed in step (2) into a stainless steel dough maker, which beats and rotates the material, and a mixed liquid comprising any or all f of glycerin, fish oil, multiple vitamin, potassium sorbate, natural essence and food pigment is added; (4) a feeding step in which the material processed in step (3) is gradually introduced into a feeder. The forming procedure comprises: squeezing the materials from both feeders into a pressing round die, producing a casing 11 having a cylindrical cross section 12 with a first end 13 and a second end 14, wherein the casing 11 comprises the first and second sections 15 and 16 having edges running along the length of the casing 11 joined to one another, cutting the casing 11 into small pieces, and knotting the casing 11 at the first end 13 and the second end 14 into a desired shape.

All references cited herein, including patents, patent applications, and publications, are hereby incorporated by reference in their entireties, whether previously specifically incorporated or not. The publications mentioned herein are cited for the purpose of describing and disclosing reagents, methodologies and concepts that may be used in connection with the present invention. Nothing herein is to be construed as an admission that these references are prior art in relation to the inventions described herein.

Although this invention has been described in connection with specific embodiments thereof, it will be understood that it is capable of further modifications. This application is intended to cover any variations, uses, or adaptations of the invention following, in general, the principles of the invention and including such departures from the present disclosure as come within known or customary practice within the art to which the invention pertains and as may be applied to the essential features hereinbefore set forth.

## Claims

1. A pet chew comprising :
a casing having a cylindrical cross section and defining a first end and a second end, the casing comprising a first section and a second section having edges running along the length of the casing joined to one another, wherein the first section has a different appearance than the second section, wherein the first section comprises an edible plant material and the second section comprises a meat material, and wherein the casing is knotted at the first end and the second end.

2. The pet chew of claim 1, wherein the plant material of the first section comprises a plant starch selected from corn, wheat, sweet potato, potato, or tapioca.

3. The pet chew of claim 1, wherein the meat-containing material of the second section comprises at least one of chicken, duck, beef, pork, lamb, or rabbit.

4. The pet chew of claim 1, wherein the casing further comprises glycerin in one of the first and second sections, or both.

5. The pet chew of claim 1, wherein the casing further comprises rawhide in one of the first and second sections.

6. The pet chew of claim 1, wherein the plant material in the casing is 50% to 70% by weight of the casing, the meat-containing material in the casing is 5% to 20% by weight of the casing, and the glycerin in the casing is 2% to 8% by weight of the casing.

7. The pet chew of claim 5, wherein the rawhide in the casing is 1% to 5% by weight of the casing.

8. The pet chew of claim 1, wherein the casing further comprises at least one additive material.

9. The pet chew of claim 8, wherein the at least one additive material comprises glucosamine hydrochloride and chondroitin sulphate.

10. The pet chew of claim 8, wherein the at least one additive material comprises herbs and calcium, preferably wherein the herbs comprises at least one of parsley, peppermint, chlorophyll, or yucca extract.

11. The pet chew of claim 8, wherein the at least one additive material comprises omega 3 & 6 fatty acids, flaxseed and vitamin E.

12. The pet chew of claim 8, wherein the at least one additive material in the casing is 0.05% to 1% by weight of the casing.

13. The pet chew of claim 1, wherein the casing further comprises an edible pigment in one of the first and second sections, or both, preferably wherein the edible pigment in the casing is 0.1% to 0.2% by weight of the casing.

14. The pet chew of claim 1, wherein the casing further comprises potassium sorbate in one of the first and second sections, or both, preferably wherein the potassium sorbate in the casing is 0.01% to 0.08% by weight of the casing.
